# EUROPEAN PATENT SPECIFICATION

(11) **EP 3 660 433 B1**
(45) Date of publication and mention of the grant of the patent: **23.08.2023**
(21) Application number: 19208367.3
(22) Date of filing: 11.11.2019
(51) Int. Cl.: B64D 13/06, F16J 15/06, F16L 23/00, F16L 23/14, F28D 1/02, F28F 9/00, F24F 13/30

(54) **HEAT EXCHANGER GASKET**
WÄRMETAUSCHERDICHTUNG
JOINT D'ÉCHANGEUR DE CHALEUR

(30) Priority: 28.11.2018 US 201816202652
(43) Date of publication of application: 03.06.2020
(73) Proprietor: Hamilton Sundstrand Corporation, Charlotte, NC 28217-4578 (US)
(72) Inventor: DeLugan, Anthony, Westfield, MA 01085 (US); Army, Donald E., Enfield, CT Connecticut 06082 (US)
(74) Representative: Dehns

(56) References cited:
- EP-A1- 2 871 437
- EP-A2- 1 870 570
- WO-A1-2016/164025
- DE-A1- 10 353 040
- DE-A1- 19 516 375
- DE-A1-102008 038 052
- DE-C1- 4 242 997
- DE-U1- 29 806 198
- US-A1- 2006 185 833
- US-A1- 2009 285 624
- US-A1- 2012 007 358
- US-A1- 2017 363 372
- US-B1- 6 231 050

## Description

### BACKGROUND

The present disclosure generally relates to heat exchangers. In particular, the present disclosure relates to metal gaskets used in heat exchangers.

Heat exchanger assemblies, such as those used to help provide conditioned air as part of an environmental control system ("ECS") in an aircraft, may require the use of metal gaskets at an interface with mating ducting to prevent fluid leakage. It can be undesirable to ship a metal gasket separately from a corresponding heat exchanger unit. Furthermore, it may not be possible to adhesively bond the gasket to the heat exchanger unit under high temperature conditions, due to the limits of adhesive bonding temperatures. US 2006/185833 relates to a heat exchanger of the air cooled radiator type with a gasket and discloses the preamble of claim 1 and claim 9.

### SUMMARY

A method of affixing a gasket to a flange of a heat exchanger core is defined in claim 1 and includes aligning the gasket with the flange of the heat exchanger core. The gasket includes a tab extending outward from the gasket. The flange of the heat exchanger core is contacted with the gasket. The gasket is secured to the flange by bending the tab of the gasket around an outer edge of the flange and such that relative motion between the gasket and the flange is prevented by the tab.

A gasket for engagement with a flange of a header of a heat exchanger assembly is provided in claim 9 and includes a body and a series malleable tabs. The body includes an external edge disposed along an exterior of the body, an internal edge defining an orifice passing through the body, and a sealing feature disposed in the body and extending around the internal edge of the body. The series of malleable tabs extends from the external edge of the body.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1A is an exploded perspective view of a gasket and a heat exchanger core with a flange.
FIG. 1B is a perspective view of the gasket of FIG. 1A in contact with the flange of the heat exchanger core.
FIG. 2 is an enlarged view of a portion of the gasket identified by 2-2 from FIG. 1B.
FIG. 3 is a perspective cross section view of the gasket.
FIG. 4A is a perspective view of the gasket attached to the flange of the heat exchanger core.
FIG. 4B is an enlarged perspective view of portion 4-4 of the gasket as shown in FIG. 4A, illustrating the gasket attached to the flange of the heat exchanger core via tabs of the gasket.
FIG. 4C is an enlarged perspective view of portion 4-4 of the gasket as shown in FIG. 4A, illustrating the tabs in a second, intermediate position relative to the flange of the heat exchanger core.
FIG. 4D is an enlarged perspective view of portion 4-4 of the gasket as shown in FIG. 4A, illustrating a third, final position of the tabs relative to the flange of the heat exchanger core.
FIG. 5A is a perspective view of a tab connected to an outer edge of a gasket.
FIG. 5B is a perspective view of a tab connected to a gasket near an outer edge of the gasket.
FIG. 5C is a perspective view of a tab connected perpendicularly to an outer edge of a gasket.
FIG. 6 is a top view of a gasket with an elliptical shape.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

For a discussion of an exemplary heat exchanger assembly, see United States Patent Application Serial No. 15/879,234 entitled "ENVIRONMENTAL CONTROL SYSTEM TRI-HEAT EXCHANGER" filed on January 1, 2018.

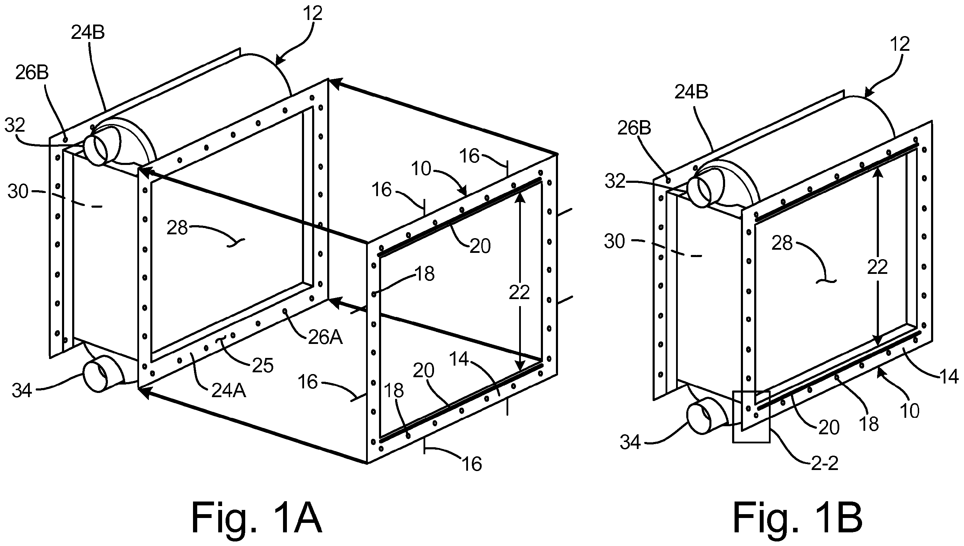

FIG. 1A is an exploded perspective view of gasket 10 and heat exchanger core 12 with gasket 10 shown as separated from heat exchanger core 12. Gasket 10 is shown to include body 14, tabs 16, holes 18, sealing element 20, and orifice 22. Heat exchanger core 12 is shown to include first flange 24A (with holes 26A), second flange 24B (with holes 26B), first circuit inlet 28, first circuit outlet 30, second circuit inlet 32, and second circuit outlet 34. FIG. 1B is a perspective view of gasket 10 in contact with first flange 24A and shows tabs 16 engaged with first flange 24A. FIGS. 1A and 1B will be discussed in tandem.

Gasket 10 is a sealing element. In this non-limiting embodiment, gasket 10 is a crushable, metallic face seal. Here, a shape of gasket 10 is shown as rectangular. In other non-limiting embodiments, gasket 10 can include other geometric shapes such as circular, elliptical, parallelogram Heat exchanger core 12 is a core of a heat exchanger. In this non-limiting embodiment, heat exchanger core 12 can be part of a heat exchanger assembly of an ECS of an aircraft. Heat exchanger core 12 can, for example, include hot and cold circuits passing through heat exchanger core 12 (e.g., in a cross-flow relationship). Body 14 is a flat piece of solid material. Body 14 is made of a metallic material and can be a die-stamped piece of sheet metal. Tabs 16 are flat, elongated strips of solid material. Eight tabs 16 are shown. In other embodiments, however, there can be more or less than eight tabs 16. Holes 18, 26A, and 26B are openings. Sealing element 20 is a portion of body 14 that projects outward from a major face of body 14. Orifice 22 is an opening in body 14.

First flange 24A and second flange 24B are flat rims of solid material extending from heat exchanger core 12. In this non-limiting embodiment, first flange 24A and second flange 24B are picture frame flanges with a rectangular shape. In other non-limiting embodiments, first flange 24A and/or second flange 24B can include non-rectangular shapes such as circular, C-shaped, triangular, elliptical, etc. First major face 25 is a flat surface of first flange 24A. First circuit inlet 28, first circuit outlet 30, second circuit inlet 32, and second circuit outlet 34 are fluidic openings.

In FIG. 1A, gasket 10 is shown in a pre-installation phase and as being positioned a distance from first flange 24A. In this stage, an orientation of gasket 10 is adjusted such that a major face of gasket 10 is parallel to a major face of first flange 24A. Here in FIG. 1A, features of gasket 10 are aligned with corresponding features of first flange 24A. For example, gasket 10 is shown as aligned with first flange 24A such that each of the four corners of gasket 10 are in alignment with the four corners of first flange 24A. Additionally, holes 18 in gasket 10 are aligned with corresponding holes 26A disposed in first flange 24A of heat exchanger core 12.

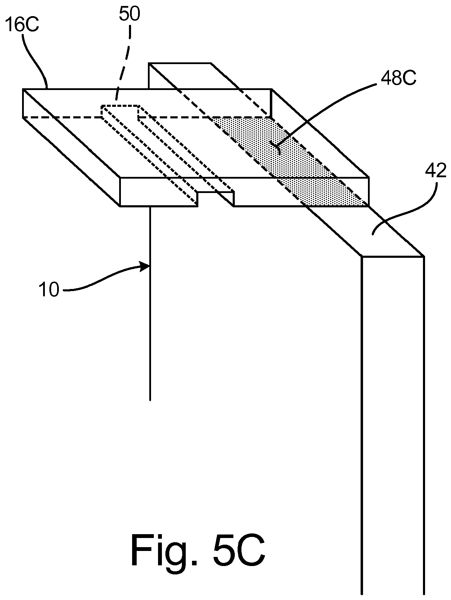

Heat exchanger core 12 is fluidly connected to other components of the aircraft ECS via first circuit inlet 28, first circuit outlet 30, second circuit inlet 32, and second circuit outlet 34. Tabs 16 are connected to and extend from body 14. In FIG. 1A, tabs 16 are shown as extending outward from gasket 10 along a plane that is parallel to a major face of gasket 10. In another non-limiting embodiment, tabs 16 are shown as extending from gasket 10 approximately perpendicular to a major face of gasket 10 (see. e.g., FIG. 5C). Although tabs 16 can be integrally formed with body 14, for example, tabs 16 and body 14 can be produced together via a common sheet metal stamping process, the present invention proposes that tabs 16 are bonded to body 14 through welding.

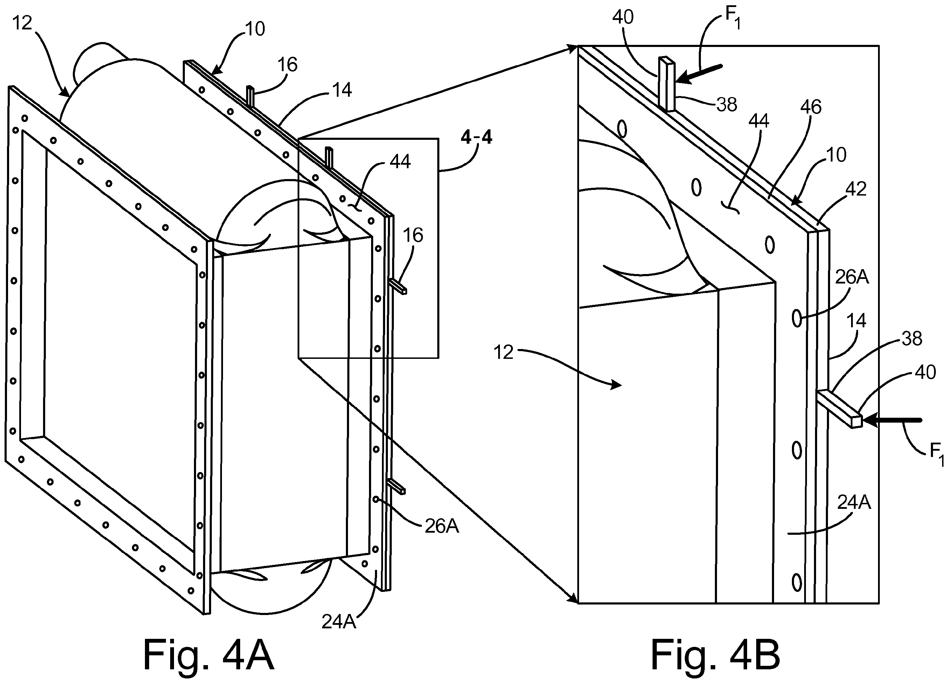

In FIG. 1B, gasket 10 is shown as brought into contact with first flange 24A. As shown in FIG. 1B, tabs 16 are bent around first flange 24A of heat exchanger core 12 so as to affix gasket 10 to first flange 24A. During operation of heat exchanger core 12, tabs 16 are retained as connected to and part of gasket 10. (Further discussion regarding the connection between tabs 16 and first flange 24A is provided below with respect to FIGS. 4A-4D.) Holes 18 are disposed in and extend through portions of body 14. Sealing element 20 is connected to and extends outward from body 14 in a direction that is perpendicular to the major faces of body 14. Orifice 22 is extends through an inner portion of body 14 of gasket 10.

First flange 24A and second flange 24B are connected to and extend outward from opposite sides of heat exchanger core 12. Holes 26A are disposed in and extend through first flange 24A. Holes 26B are disposed in and extend through second flange 26B. First circuit inlet 28 passes through first flange 24A and is fluidly connected to heat exchanger core 12. First circuit outlet 30 passes through second flange 24B and is fluidly connected to heat exchanger core 12. Second circuit inlet 32 is fluidly connected to a top portion of heat exchanger core 12 (top of heat exchanger core 12 as shown in FIGS. 1A and 1B). Second circuit outlet 34 is fluidly connected to a bottom portion of heat exchanger core 12 (bottom of heat exchanger core 12 as shown in FIGS. 1A and 1B).

Gasket 10 provides a fluidic seal between first flange 24A and another component of the ECS that attaches/connects to heat exchanger core 12 via first flange 24A. Gasket 10 is also capable of withstanding temperatures of 800° Fahrenheit (427 degrees Celsius) or greater such as 1,000° Fahrenheit (538 degrees Celsius). Heat exchanger core 12 provides transfer of thermal energy between two separate fluids (e.g., aircraft engine bleed air, ambient/fresh air, etc.) Tabs 16 secure gasket 10 to first flange 24A by bending around an outer edge of first flange 24A thereby preventing relative motion between gasket 10 and first flange 24A. Holes 18 in gasket 10 provide an opening through which a mechanical fastener extends in order to affix gasket 10 to first flange 24A of gasket 12.

Sealing element 20 is a projection from body 14 or a projecting portion of body 14 that provides a sealing interface between body 14 of gasket 10 and another component that comes of the ECS that connects to first flange 24A on an opposite side of gasket 10 as first flange 24A. Orifice 22 provides an opening through which a flow of fluid (e.g., air) enters into heat exchanger core 12. First flange 24A and second flange 24B provide interfaces to which other ECS components mount to. Holes 26A and 26B receive fasteners (e.g., bolts) that affix ECS components to first and second flanges 24A and 24B. First circuit inlet 28 and second circuit inlet 32 transfer fluid into heat exchanger core 12. First circuit outlet 30 and second circuit outlet 34 transfer fluid out of heat exchanger core 12.

Tabs 16 of gasket 10 enable gasket 10 to be held in place relative to first flange 24A of heat exchanger core 12 until gasket 10 can be secured via fasteners as described above. This improves the assembly process of the ECS by saving an installer the work of holding gasket 10 in place while trying to sandwich gasket 10 between first flange 24A and the other component being attached to first flange 24A. This can be particularly beneficial when conditions require first flange 24A to be facing in a downwards direction relative to gravity during installation/assembly. Using tabs 16 to attach gasket 10 to first flange 24A also enables making gasket 10 integral to heat exchanger core 12 in order to avoid shipping gasket 10 by itself (e.g., separately from heat exchanger core 12), and reducing any logistical/handling issues associated with shipping gasket 10 separately from heat exchanger core 12. Tabs 16 also provide the benefit of reducing maintenance time at the airliner level and the number of parts the maintainer needs to handle. Additionally, due to the mechanical nature of the connection between tabs 16 and first flange 24A, gasket 10 is capable of being fastened to heat exchanger core 12 when temperatures are too high to use a bonding adhesive (e.g., such as temperature above 800 degrees Fahrenheit).

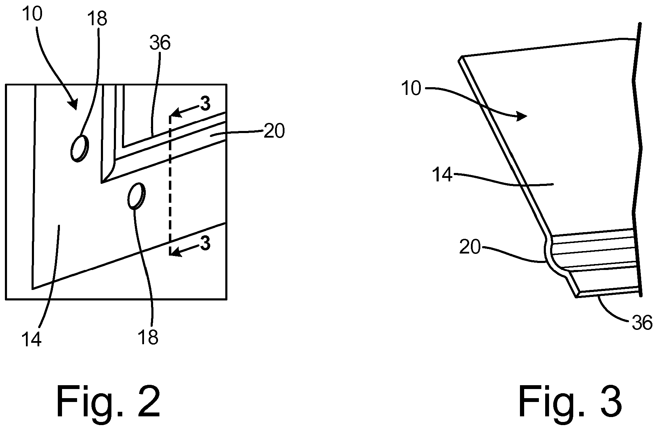

FIG. 2 is an enlarged view of a portion of gasket 10 identified by 2-2 from FIG. 1B and shows body 14, holes 18, sealing element 20, orifice 22, and internal edge 36 of body 14. FIG. 3 is a perspective cross section view of gasket 10 taken along 3-3 in FIG. 2 and shows body 14, sealing element 20, and internal edge 36 of body 14. FIGS. 2 and 3 are discussed in tandem.

FIGS. 2 and 3 are provided to show the relative position of sealing element 20 in body 14, as well as to show a shape of sealing element 20. Here, sealing element 20 is shown as a C-shaped, raised ridge that protrudes outward from body 14 of gasket 10 in a direction that is perpendicular to a plane of body 14. In other non-limiting embodiments, sealing element 20 can include a shape other than a C-shape, such as a triangle, square, ellipse, or other shape. Sealing element 20 functions as a crushable seal that engages with a flat face of another component brought into contact with gasket 10. Sealing element 20 prevents leakage of fluid flow going through first flange 24A. In this non-limiting example, sealing element 20 is compressed under pressure in order to trap any fluid from leaking once fasteners (e.g., bolts) attached first flange 24A to another component of the ECS.

FIG. 4A is a perspective view of gasket 10 attached to first flange 24A of heat exchanger core 12. FIG. 4B is an enlarged perspective view of the portion 4-4 shown in FIG. 4A and shows gasket 10 (with body 14, tabs 16, first ends 38 (of tabs 16), second end 40 (of tabs 16), and external edge 42 of body 14), and heat exchanger core 12 (with first flange 24A, holes 26A, second major face 44, and outer endwall 46), and forces F₁. FIGS. 4A and 4B show tabs 16 shown in a first, initial position. FIGS. 4A and 4B will be discussed in tandem.

First ends 38 are ends of tabs 16 that are proximal (e.g., nearest) to external edge 42 of gasket 10. Second ends 40 are ends of tabs 16 that are distal (e.g., farthest) from external edge 42 of gasket 10. External edge 42 is an endwall of body 14. Second major face 44 is a large, flat surface of first flange 24A. Outer endwall 46 is an external edge of first flange 24A.

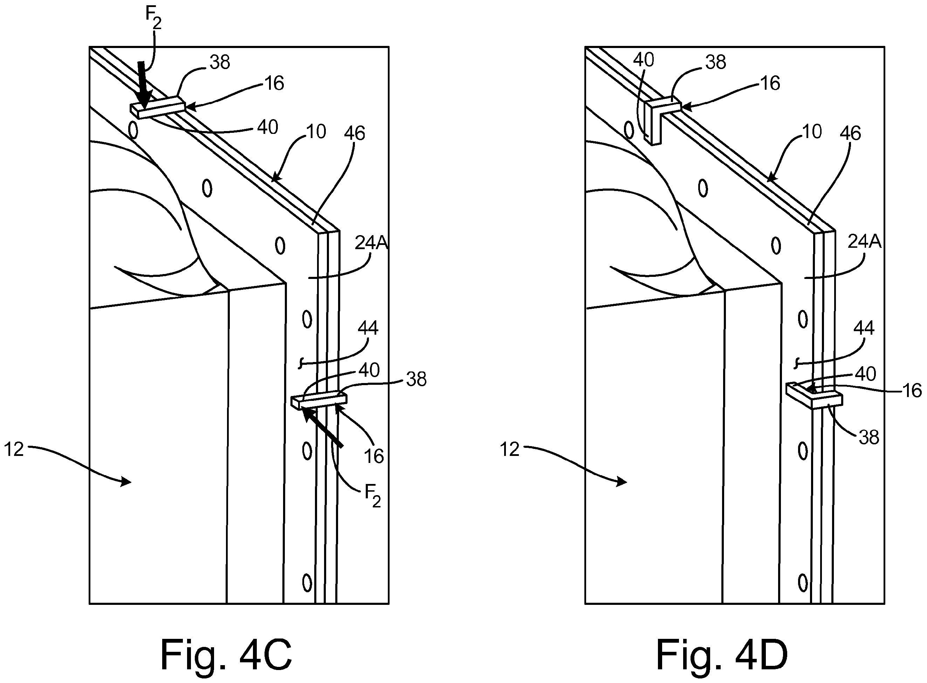

As can be seen in FIGS. 4A and 4B, tabs 16 occupy an initial, un-bent position extending in the same plane as body 14. As shown in FIG. 4B, forces Fi are then applied to second ends 40 in order to push second ends 40 in a first direction that is towards heat exchanger core 12 and that is perpendicular to second major face 44 of first flange 24A. The resulting positions of tabs 16 after forces Fi have been applied to tabs 16 are shown in FIG. 4C.

FIG. 4C shows tabs 16 in a second, intermediate position. In FIG. 4C, tabs 16 have been bent approximately 90 degrees such that second ends 40 of tabs are positioned perpendicular relative to second major face 44 of first flange 24A. As shown in FIG. 4C, forces F₂ are then applied to second ends 40 in order to push second ends 40 towards a middle of gasket 10 and such that second ends 40 become parallel to second major face 44 of first flange 24A. These positions of tabs 16 are shown in FIG. 4D.

FIG. 4D shows a third, final position of tabs 16 relative to first flange 24A. In FIG. 4D, tabs 16 occupy a third and final position such that first ends 38 of tabs 16 come into contact with outer endwall 46 of first flange 24A and such that second ends 40 of tabs 16 come into contact with second major face 44 of first flange 24A. These positions of tabs 16 enable gasket 16 to be affixed to first flange 24A such that relative motion between gasket 10 and first flange 24A is prevented.

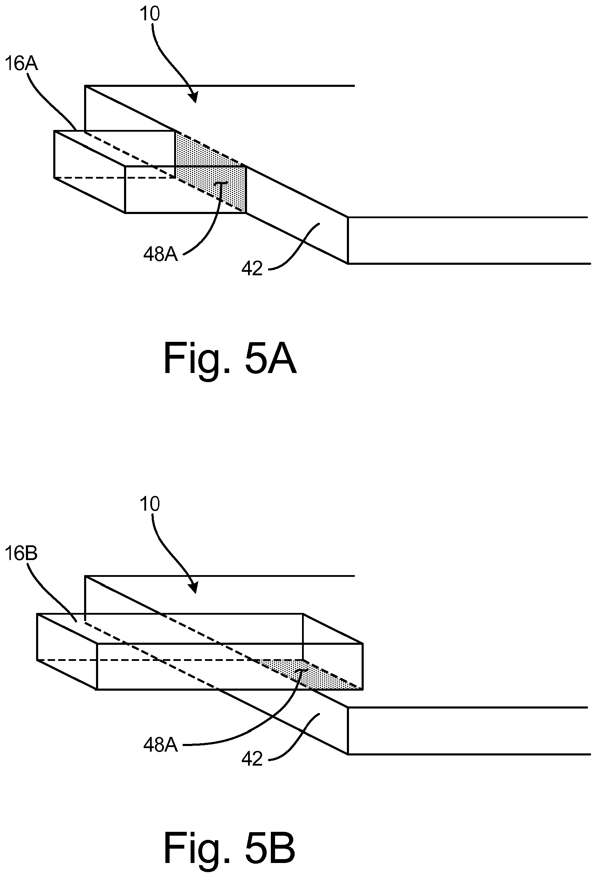

FIG. 5A is a perspective view of tab 16A connected to external edge 42 of gasket 10 at welded interface 48A. Here, tab 16A is shown as connected to external edge 42 of gasket 10 with a weld joint. Both gasket 10 and tab 16A include a metallic material enabling the connection of the two to be formed via welding. As opposed to tradition adhesive bonding, welded interface 48A allows gasket 10 with tab 16A to be used in a high temperature environments common in aircraft where temperatures can be too high for adhesive bonding techniques. Attaching tab 16A to gasket 10 as shown in FIG. 5A also enables tab 16A to be of a different material than gasket 10 allowing a user to select a desirable malleability of tabs 16A based on material properties of the metal chosen for tabs 16A.

FIG. 5B is a perspective view of tab 16B connected to gasket 10 near external edge 42 of gasket 10. Here, tab 16B is welded to gasket 10 at welded interface 48B located on a major surface of gasket 10. This configuration and location of welded interface 48B allows for an alternate location of tab 16B which may be desirable based on the thickness of tab 16B and the malleability of tab 16B.

FIG. 5C is a perspective view of tab 16C connected perpendicularly to external edge 42 of gasket 10 at welded interface 48C and shows tab 16C as including relief cut 50. Relief cut 50 is a channel that extends or cuts into a portion of tab 16C. In this non-limiting embodiment, a single relief cut 50 is shown. In other non-limiting embodiments, more than one relief cut 50 can be used in tab 16C (and/or tabs 16, 16A, and 16B). Relief cut 50 can be cut into or stamped in tab 16C.

Relief cut 50 provides a pre-determined location where tab 16C is to be bent as force is applied to tab 16C to bend tab 16C around first flange 24A (see e.g., FIGS. 4A-4D). Relief cut 50 reduces the potential of shearing or breaking tab 16C as tab 16C is bent during the steps of attaching gasket 10 to first flange 24A of heat exchanger core 12. By creating a designated bend of tab 16C with relief cut 50, there is less material that is subject to bending at relief cut 50 than at other portions of tab 16C, thereby reducing the amount of shear forces encountered by tab 16C at relief cut 50.

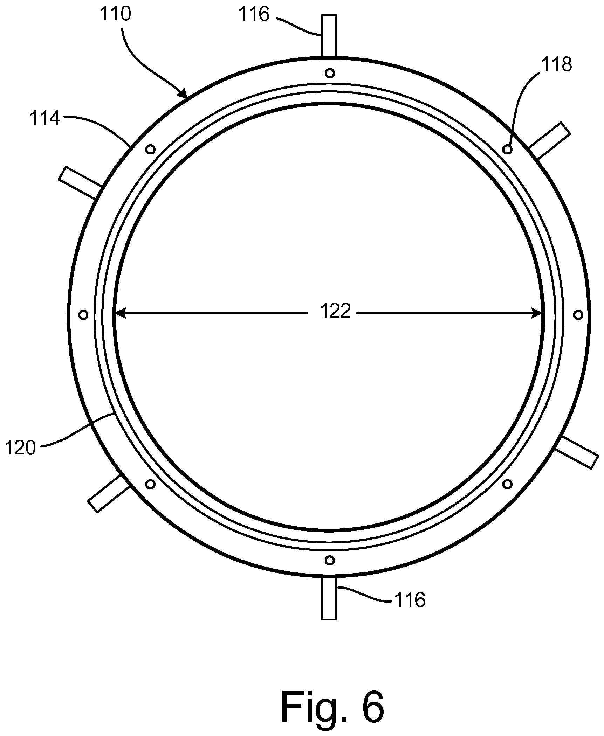

FIG. 6 is a top view of gasket 110 with an elliptical shape and shows body 114, tabs 116, holes 118, sealing element 120, and orifice 122. Here, gasket 110 is shown to include a circular or elliptical shape (e.g., with its eccentricity equal to zero). Elliptically shaped gasket 110 can be used with corresponding elliptically shaped attachment flanges on a heat exchanger assembly.

### Discussion of Possible Embodiments

The following are non-exclusive descriptions of possible embodiments of the present invention.

A method of affixing a gasket to a flange of a heat exchanger core includes aligning the gasket with the flange of the heat exchanger core. The gasket includes a tab extending outward from the gasket. The flange of the heat exchanger core is contacted with the gasket. The gasket is secured to the flange by bending the tab of the gasket around an outer edge of the flange and such that relative motion between the gasket and the flange is prevented by the tab.

The method of the preceding paragraph can optionally include, additionally and/or alternatively, any one or more of the following steps, features, configurations and/or additional components.

Aligning the gasket with the flange of the heat exchanger core can comprise: positioning the gasket a distance from the flange of the heat exchanger core; adjusting an orientation of the gasket such that a major face of the gasket can be parallel to a major face of the flange; and/or aligning features of the gasket with corresponding features of the flange.

Through holes in the gasket can be aligned with corresponding through holes disposed in the flange of the heat exchanger core.

Bending the tab of the gasket around an outer edge of the flange can comprise: pushing a distal end of the tab in a first direction that can be towards the heat exchanger core and/or perpendicular to the major face of the flange; and/or pushing the distal end of the tab towards a middle of the gasket and/or parallel to the major face of the flange.

The tab can be retained as part of the gasket during operation of the heat exchanger core.

The gasket can comprises the body with an external edge that can be disposed along an exterior of the body, an internal edge that can define an orifice passing through the body, and/or a sealing feature that can be disposed in the body and/or extend around the orifice of the body; and/or the tab can be connected to and/or extend from the external edge of the body, wherein the tab can include a first end proximal to the external edge of the gasket and/or a second end that can be located distally from the first end; wherein the flange can comprise a first major face facing towards the gasket, a second major face on an opposite side of the flange as the first face, and/or an outer endwall positioned and/or extending between the first and second major faces of the flange; and wherein bending the tab of the gasket around an outer edge of the flange can comprise bending the tab such that the first end of the tab comes into contact with the outer endwall of the flange and/or such that the second end of the tab comes into contact with the second major face of the flange.

The gasket can comprise a metallic face seal capable of withstanding temperatures of 800 degrees Fahrenheit (427 degree Celsius) or greater.

The tab can extend outward from the gasket along a plane that can be parallel to a major face of the gasket.

Bending the tab can comprises bending the tab at a location of a relief cut disposed in the tab.

A gasket for engagement with a flange of a header of a heat exchanger assembly includes a body and a series malleable tabs. The body includes an external edge disposed along an exterior of the body, an internal edge defining an orifice passing through the body, and a sealing feature disposed in the body and extending around the internal edge of the body. The series of malleable tabs extends from the external edge of the body.

The gasket of the preceding paragraph can optionally include, additionally and/or alternatively, any one or more of the following features, configurations and/or additional components.

The tabs can be capable of bending at least approximately 90 degrees.

The gasket can comprise a metallic face seal capable of withstanding temperatures of 800 degrees Fahrenheit (427 degree Celsius) or greater.

Each tab of the series of malleable tabs can extend outward from the gasket along a plane that can be parallel to a major face of the gasket.

Each tab of the series of malleable tabs can extend from the gasket approximately perpendicular to a major face of the gasket.

A tab of the series of malleable tabs can include a relief cut disposed in a portion of the tab.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of affixing a gasket to a flange of a heat exchanger core, the method comprising:
aligning the gasket with the flange of the heat exchanger core, wherein the gasket comprises:
a body; and
a tab extending outward from the body;
contacting the flange of the heat exchanger core with the gasket; and
securing the gasket to the flange by bending the tab of the gasket around an outer edge of the flange and such that relative motion between the gasket and the flange is prevented by the tab; and
**characterized in that** bending the tab is connected to the body by a weld interface, the body being formed from a first metallic material and the tab being formed from a second metallic material different from the first metallic material.

2. The method of claim 1, wherein aligning the gasket with the flange of the heat exchanger core comprises:
positioning the gasket a distance from the flange of the heat exchanger core;
adjusting an orientation of the gasket such that a major face of the gasket is parallel to a major face of the flange; and
aligning features of the gasket with corresponding features of the flange.

3. The method of claim 2, wherein aligning features of the gasket with corresponding features of the flange comprises aligning through holes in the gasket with corresponding through holes disposed in the flange of the heat exchanger core.

4. The method of claims 1 or 2, wherein bending the tab of the gasket around an outer edge of the flange comprises:
pushing a distal end of the tab in a first direction that is towards the heat exchanger core and perpendicular to the major face of the flange; and
pushing the distal end of the tab towards a middle of the gasket and parallel to the major face of the flange.

5. The method of any preceding claim, further comprising retaining the tab as part of the gasket during operation of the heat exchanger core.

6. The method of any preceding claim, further comprising:
wherein the gasket comprises:
the body comprising:
an external edge disposed along an exterior of the body;
an internal edge defining a orifice passing through the body; and
a sealing feature disposed in the body and extending around the orifice of the body; and
the tab connected to and extending from the external edge of the body, wherein the tab includes a first end proximal to the external edge of the gasket and a second end that is located distally from the first end;
wherein the flange comprise:
a first major face facing towards the gasket;
a second major face on an opposite side of the flange as the first face; and
an outer endwall positioned and extending between the first and second major faces of the flange; and
wherein bending the tab of the gasket around an outer edge of the flange comprises bending the tab such that the first end of the tab comes into contact with the outer endwall of the flange and such that the second end of the tab comes into contact with the second major face of the flange.

7. The method of any preceding claim, wherein the gasket comprises a metallic face seal capable of withstanding temperatures of 800 degrees Fahrenheit (427 degree Celsius) or greater.

8. The method of any preceding claim, wherein the tab extends outward from the gasket along a plane that is parallel to a major face of the gasket.

9. A gasket (10) for engagement with a flange of a header of a heat exchanger assembly, the gasket comprising:
a body (14) comprising:
an external edge disposed along an exterior of the body;
an internal edge defining an orifice passing through the body (14); and
a sealing feature (20) disposed in the body (14) and extending around the orifice of the body; and
a series of malleable tabs (16) extending from the external edge of the body (14),
**characterized in that**
each of the series of malleable tabs being connected to the external edge of the body by a weld interface (48A); and
that the body (14) is formed from a first metallic material, and each of the series of malleable tabs (16) is formed from a second metallic material different from the first metallic material.

10. The gasket of claim 9, wherein the tabs (16) are capable of bending at least approximately 90 degrees.

11. The gasket of claims 9 or 10, wherein the gasket (10) comprises a metallic face seal capable of withstanding temperatures of 800 degrees Fahrenheit (427 degree Celsius) or greater.

12. The gasket of claims 9 to 11, wherein each tab of the series of malleable tabs (16) extends outward from the gasket (10) along a plane that is parallel to a major face of the gasket (10).

13. The gasket of claims 9 to 11, wherein each tab of the series of malleable tabs (16) extends from the gasket approximately perpendicular to a major face of the gasket (10).

## Patentansprüche

1. Verfahren zum Befestigen einer Dichtung an einem Flansch eines Wärmetauscherkerns, wobei das Verfahren Folgendes umfasst:
Ausrichten der Dichtung mit dem Flansch des Wärmetauscherkerns, wobei die Dichtung Folgendes umfasst:
einen Körper; und
eine Lasche, die sich von dem Körper nach außen erstreckt;
Verbinden des Flansches des Wärmetauscherkerns mit der Dichtung; und
Sichern der Dichtung an dem Flansch durch Biegen der Lasche der Dichtung um einen Außenrand des Flansches und derart, dass eine relative Bewegung zwischen der Dichtung und dem Flansch durch die Lasche verhindert wird; und
**dadurch gekennzeichnet, dass** die Biegung der Lasche mit dem Körper durch eine Schweißschnittfläche verbunden ist, der Körper aus einem ersten Metallmaterial gebildet ist und die Lasche aus einem zweiten Metallmaterial, das sich von dem ersten Metallmaterial unterscheidet, gebildet ist.

2. Verfahren nach Anspruch 1, wobei das Ausrichten der Dichtung mit dem Flansch des Wärmetauscherkerns Folgendes umfasst:
Positionieren der Dichtung in einem Abstand von dem Flansch des Wärmetauscherkerns;
Anpassen einer Ausrichtung der Dichtung, sodass eine Hauptfläche der Dichtung parallel zu einer Hauptfläche des Flansches ist; und
Ausrichten von Merkmalen der Dichtung mit entsprechenden Merkmalen des Flansches.

3. Verfahren nach Anspruch 2, wobei das Ausrichten von Merkmalen der Dichtung mit entsprechenden Merkmalen des Flansches Ausrichten von Durchgangslöchern in der Dichtung mit entsprechenden Durchgangslöchern in dem Flansch des Wärmetauscherkerns umfasst.

4. Verfahren nach Anspruch 1 oder 2, wobei das Biegen der Lasche der Dichtung um einen Außenrand des Flansches herum Folgendes umfasst:
Schieben eines distalen Endes der Lasche in einer ersten Richtung, die in Richtung des Wärmetauscherkerns und senkrecht zu der Hauptfläche des Flansches verläuft; und
Schieben eines distalen Endes der Lasche in Richtung einer Mitte der Dichtung und parallel zu der Hauptfläche des Flansches.

5. Verfahren nach einem der vorstehenden Ansprüche, ferner umfassend Halten der Lasche als Teil der Dichtung während des Betriebs des Wärmetauscherkerns.

6. Verfahren nach einem der vorstehenden Ansprüche, ferner umfassend:
wobei die Dichtung Folgendes umfasst:
den Körper, der Folgendes umfasst:
einen Außenrand, der um eine Außenseite des Körpers herum angeordnet ist;
einen Innenrand, der eine Öffnung definiert, die durch den Körper verläuft; und
ein Dichtungsmerkmal, das in dem Körper angeordnet ist und sich um die Öffnung des Körpers herum erstreckt; und
die Lasche, die mit dem Außenrand des Körpers verbunden ist und sich von diesem erstreckt, wobei die Lasche ein erstes Ende proximal zu dem Außenrand der Dichtung und ein zweites Ende, das distal von dem ersten Ende liegt, beinhaltet;
wobei der Flansch Folgendes umfasst:
eine Hauptfläche, die in Richtung der Dichtung gewandt ist;
eine zweite Hauptfläche auf einer der ersten Fläche gegenüberliegenden Seite des Flansches; und
eine äußere Endwand, die zwischen der ersten und zweiten Hauptfläche des Flansches positioniert ist und sich zwischen diesen erstreckt; und
wobei das Biegen der Lasche der Dichtung um einen Außenrand des Flansches herum Biegen der Lasche derart umfasst, dass das erste Ende der Lasche mit der äußeren Endwand des Flansches in Kontakt gelangt, und derart, dass das zweite Ende der Lasche mit der zweiten Hauptfläche des Flansches in Kontakt gelangt.

7. Verfahren nach einem der vorstehenden Ansprüche, wobei die Dichtung eine metallische Flächendichtung umfasst, die in der Lage ist, Temperaturen von 800 Grad Fahrenheit (427 Grad Celsius) oder höher standzuhalten.

8. Verfahren nach einem der vorstehenden Ansprüche, wobei sich die Lasche von der Dichtung entlang einer Ebene, die parallel zu einer Hauptfläche der Dichtung ist, nach außen erstreckt.

9. Dichtung (10) für einen Eingriff mit einem Flansch eines Kopfteils einer Wärmetauscherbaugruppe, wobei die Dichtung Folgendes umfasst:
einen Körper (14), der Folgendes umfasst:
einen Außenrand, der entlang einer Außenseite des Körpers angeordnet ist;
einen Innenrand, der eine Öffnung definiert, die durch den Körper (14) verläuft; und
ein Dichtungsmerkmal (20), das in dem Körper (14) angeordnet ist und sich um die Öffnung des Körpers herum erstreckt; und
eine Reihe von verformbaren Laschen (16), die sich von dem Außenrand des Körpers (14) erstrecken,
**dadurch kennzeichnet, dass**
jede der Reihe von verformbaren Laschen mit dem Außenrand des Körpers durch eine Schweißschnittfläche (48A) verbunden ist; und dass der Körper (14) aus einem ersten Metallmaterial gebildet ist und jede der Reihe von verformbaren Laschen (16) aus einem zweiten Metallmaterial, das sich von dem ersten Metallmaterial unterscheidet, gebildet ist.

10. Dichtung nach Anspruch 9, wobei die Laschen (16) sich um mindestens ungefähr 90 Grad biegen können.

11. Dichtung nach Ansprüchen 9 oder 10, wobei die Dichtung (10) eine metallische Flächendichtung umfasst, die in der Lage ist, Temperaturen von 800 Grad Fahrenheit (427 Grad Celsius) oder höher standzuhalten.

12. Dichtung nach Ansprüchen 9 bis 11, wobei sich jede Lasche der Reihe von verformbaren Laschen (16) von der Dichtung (10) entlang einer Ebene, die parallel zu einer Hauptfläche der Dichtung (10) ist, nach außen erstreckt.

13. Dichtung nach Ansprüchen 9 bis 11, wobei sich jede Lasche der Reihe von verformbaren Laschen (16) von der Dichtung ungefähr senkrecht zu einer Hauptfläche der Dichtung (10) erstreckt.

## Revendications

1. Procédé de fixation d'un joint à une bride d'un noyau d'échangeur de chaleur, le procédé comprenant :
l'alignement du joint avec la bride du noyau d'échangeur de chaleur, dans lequel le joint comprend :
un corps ; et
une languette s'étendant vers l'extérieur depuis le corps ;
la mise en contact de la bride du noyau d'échangeur de chaleur avec le joint ; et
la fixation du joint à la bride en pliant la languette du joint autour d'un bord extérieur de la bride et de sorte que le mouvement relatif entre le joint et la bride est empêché par la languette ; et
**caractérisé en ce que** le pliage de la languette est relié au corps par une interface de soudure, le corps étant formé d'un premier matériau métallique et la languette étant formée d'un second matériau métallique différent du premier matériau métallique.

2. Procédé selon la revendication 1, dans lequel l'alignement du joint avec la bride du noyau d'échangeur de chaleur comprend :
le positionnement du joint à une distance de la bride du noyau d'échangeur de chaleur ;
l'ajustement d'une orientation du joint de sorte qu'une face principale du joint est parallèle à une face principale de la bride ; et
l'alignement de caractéristiques du joint avec des caractéristiques correspondantes de la bride.

3. Procédé selon la revendication 2, dans lequel l'alignement de caractéristiques du joint avec des caractéristiques correspondantes de la bride comprend l'alignement de trous traversants dans le joint avec des trous traversants correspondants disposés dans la bride du noyau d'échangeur de chaleur.

4. Procédé selon les revendications 1 ou 2, dans lequel le pliage de la languette du joint autour d'un bord extérieur de la bride comprend :
le fait de pousser une extrémité distale de la languette dans une première direction qui est vers le noyau d'échangeur de chaleur et perpendiculaire à la face principale de la bride ; et
le fait de pousser l'extrémité distale de la languette vers un milieu du joint et parallèlement à la face principale de la bride.

5. Procédé selon une quelconque revendication précédente, comprenant en outre la retenue de la languette en tant que partie du joint pendant le fonctionnement du noyau d'échangeur de chaleur.

6. Procédé selon une quelconque revendication précédente, comprenant en outre :
dans lequel le joint comprend :
le corps comprenant :
un bord externe disposé le long d'un extérieur du corps ;
un bord interne définissant un orifice passant à travers le corps ; et
un élément d'étanchéité disposé dans le corps et s'étendant autour de l'orifice du corps ; et
la languette reliée au bord externe du corps et s'étendant à partir de celui-ci, dans lequel la languette comporte une première extrémité proximale au bord externe du joint et une seconde extrémité qui est située de manière distale par rapport à la première extrémité ;
dans lequel la bride comprend :
une première face principale tournée vers le joint ;
une seconde face principale sur un côté opposé de la bride en tant que première face ; et
une paroi d'extrémité extérieure positionnée entre les première et seconde faces principales de la bride et s'étendant entre celles-ci ; et
dans lequel le pliage de la languette du joint autour d'un bord extérieur de la bride comprend le pliage de la languette de sorte que la première extrémité de la languette entre en contact avec la paroi d'extrémité extérieure de la bride et de sorte que la seconde extrémité de la languette entre en contact avec la seconde face principale de la bride.

7. Procédé selon une quelconque revendication précédente, dans lequel le joint comprend une étanchéité faciale métallique capable de résister à des températures de 800 degrés Fahrenheit (427 degrés Celsius) ou plus.

8. Procédé selon une quelconque revendication précédente, dans lequel la languette s'étend vers l'extérieur depuis le joint le long d'un plan qui est parallèle à une face principale du joint.

9. Joint (10) destiné à venir en prise avec une bride d'un collecteur d'un ensemble d'échangeur de chaleur, le joint comprenant :
un corps (14) comprenant :
un bord externe disposé le long d'un extérieur du corps ;
un bord interne définissant un orifice passant à travers le corps (14) ; et
un élément d'étanchéité (20) disposé dans le corps (14) et s'entendant autour de l'orifice du corps ; et
une série de languettes (16) malléables s'étendant depuis le bord externe du corps (14), **caractérisé en ce que** chacune de la série de languettes malléables est reliée au bord externe du corps par une interface de soudure (48A) ; et
le corps (14) est formé d'un premier matériau métallique, et chacune de la série de languettes (16) malléables est formée d'un second matériau métallique différent du premier matériau métallique.

10. Joint selon la revendication 9, dans lequel les languettes (16) peuvent se plier d'au moins environ 90 degrés.

11. Joint selon les revendications 9 ou 10, dans lequel le joint (10) comprend une étanchéité faciale métallique capable de résister à des températures de 800 degrés Fahrenheit (427 degrés Celsius) ou plus.

12. Joint selon les revendications 9 à 11, dans lequel chaque languette de la série de languettes (16) malléables s'étend vers l'extérieur depuis le joint (10) le long d'un plan qui est parallèle à une face principale du joint (10).

13. Joint selon les revendications 9 à 11, dans lequel chaque languette de la série de languettes (16) malléables s'étend depuis le joint approximativement perpendiculairement à une face principale du joint (10).
